# EUROPEAN PATENT APPLICATION

(11) **EP 1 594 296 A1**
(43) Date of publication of application: **09.11.2005**
(21) Application number: 04010848.2
(22) Date of filing: 06.05.2004
(51) Int. Cl.: H04M 1/725, H04M 1/57, H04L 12/58

(54) **Electronic equipment for receiving and displaying presence information in wireless communication system**

(71) Applicant: Sony Ericsson Mobile Communications AB, 221 88 Lund (SE)
(72) Inventor: Svensson, Magnus, 234 38 Lomma (SE); Wong, Marcel, 222 20 Lund (SE); Wendel, Frederik, 222 20 Lund (SE)
(74) Representative: Körber, Martin Hans

(57) **Abstract**

The present invention relates to an electronic equipment for receiving information in a wireless communication system, with an information source identification memory (10) for storing information source identification information and additional information relating to the stored information source identification information, a first detector (8) for detecting if the source of a received information can be identified by determining if an information source identification information comprised in the received information matches an information source identification information stored in the information source identification memory (10), and, if the detection result is positive, displaying the additional information of the matching information source identification information stored in the information source identification memory (10) on a display (6), characterized by a second detector (9) for detecting if the received information comprises presence information relating to the information source, whereby, if presence information is comprised in the received information, the presence information is displayed on display instead of or in addition to the additional information of the matching information source identification information.

The present invention also relates to a method for operating such an electronic equipment.

## Description

### TECHNICAL FIELD OF THE INVENTION

The present invention relates to an electronic equipment for receiving information in a wireless communication system. Specifically, the present invention relates to the problem of displaying information, relating to an information source, such as a calling party or the like, on the display of the electronic equipment.

### DESCRIPTION OF RELATED ART

At present, most electronic equipments for receiving information in a wireless communication system, such as mobile telephones, pagers, personal digital assistants, electronic organisers and so forth, are able, upon receiving information such as calls, messages and the like, in the wireless communication system, to display some kind of additional information relating to the identity of the information source. Such additional information is e.g. the name or even an image of the calling party. For example, state of the art portable radio communication devices, e.g. mobile phones, check if an incoming call or an incoming message comprises the phone number of a calling or message sending party and detects if the phone number is listed in the internal phone book stored in an internal memory of the mobile phone. If this is the case, then the name allocated to the received phone number is displayed on the display of the mobile phone so that the user of the mobile phone knows immediately the identity of the calling or message sending party. The same is true for electronic equipment which are exclusively receiving information, such as pagers. More developed mobile devices even allow a user to store and allocate an image to a phone book entry. Hereby, upon receiving and detecting an incoming call or an incoming message from this particular party, the image is displayed so that the user of the mobile phone immediately sees the image, e.g. the face, of a calling party, on the display of the mobile phone.

### SUMMARY

The general problem with the state of the art electronic equipment for receiving information in a wireless communication system as outlined above is that the additional information, such as names and images, which is stored in the electronic equipment for the visualisation of information about an information source is static and usually remains unchanged for long periods of time. Known electronic equipments do not provide any functionality to visualise any kind of current or updated information in relation to the identity of an information source.

The object of the present invention is therefore to provide an electronic equipment for receiving information in a wireless communication system as well as a method for operating such an electronic equipment, which enable the display of current or updated information about an information source from which information is received.

The above-mentioned object is achieved by an electronic equipment for receiving information in a wireless communication system according to claim 1.

The electronic equipment according to the present invention comprises an information source identification memory for storing information source identification information and additional information relating to the stored information source identification info, a first detector for detecting if the source of received information can be identified by determining if an information source identification information comprised in the received information matches an information source identification information stored in the information source identification memory, and, if the detection result is positive, displaying the additional information of the matching information source identification information stored in the information source identification memory on a display. According to the present invention, the electronic equipment is characterised by a second detector for detecting if the received information comprises presence information relating to the information source, whereby, if presence information is comprised in the received information, the presence information is displayed on display means instead of or in addition to the additional information of the matching information source identification information.

The above-mentioned object is further achieved by a method for operating an electronic equipment for receiving information in a wireless communication system according to claim 7.

The method according to the present invention comprises the steps of detecting if the source of a received information can be identified by determining if an information source identification information comprised in the received information matches an information source identification information stored in the information storage identification memory, and, if the detection result is positive, displaying the additional information relating to the matching information source identification information stored in the information source identification memory on a display. The method according to the present invention is characterised by the further step of detecting if the received information comprises presence information relating to the information source, whereby, if presence information is comprised in the received information, the presence information is displayed on display means instead of or in addition to the additional information of the matching information source identification information.

In the context of the present application and the present invention, the term "electronic equipment for receiving information in a wireless communication system" includes any kind of portable radio communication equipment. The term "portable radio communication equipment" includes all equipments such as mobile telephones, mobile cell phones, pagers, personal digital assistants, communicators, i.e. electronic organisers, smartphones or the like. The term "wireless communication system" relates to any kind of communication or telecommunication system which enables the wireless transfer of information. Although the present invention is mainly dealing with the receipt of information, it is to be noted that the electronic equipment and the method according to the present invention are not exclusively limited to the receipt of information but may in a practical application also enable the transmission of information in a wireless communication system.

The term "presence information" includes the presence features and presence attributes as defined and specified in the Wireless Village initiative and standardisation (Wireless Village is also called "The mobile IMPS initiative"). The Wireless Village initiative is part of the Open Mobile Alliance (OMA). Hereby, presence information (or presence attributes or presence features) is information about the status and the reachability of a specific individual, which is usually a person but may be a group of persons. Further, such a specific individual could be a role such as "helpdesk" or a resource such as "conference room no.. 27". Such individuals (also called "Presentities") are generally referenced by distinguished names, such as "John Doe", "John.Doe@company.com" and the like or by phone numbers. In the context of the present invention and the present application, such individuals or presentities are included in the meaning of the term "information source". It is however noted that an individual in any case requires an electronic equipment for transmitting information in the wireless communication system, so that the term "information source" can be regarded as a combination of an individual with any kind of electronic equipment which is able to transmit information in a wireless communication system, such as mobile telephones, fixed network telephones, servers, computers, personal digital assistants and so forth which are able to transmit any kind of information in a wireless communication system. The term "information" relates to any kind of information which can be transmitted in the wireless communication system, including phone calls, messages of any kind of format and size and so forth.

The term "information source identification information" includes any kind of address information, such as phone numbers, e-mail addresses, wireless web addresses and to forth which enable the transmission of information in the wireless communication system to an electromc equipment according to the present invention.

The term "additional information relating to information source identification information" relates to any kind of additional information which enables the identification and recognition of an information source, including names, images, symbols, sounds and so forth.

Advantageously, the presence information detected by the second detector is automatically stored in the information source identification memory in allocation to the respective sort information source identification information. Hereby, the present information advantageously replaced and/or updates the additional information stored in the information source identification memory in allocation to the respective information source.

Further advantageously, the information source identification information comprises a phone number allocated to an information source and the additional information comprises a name, an image and/or a symbol allocated to an information source.

Advantageously, the presence information comprises information about the status and/or the reachability of the information source. Hereby, the presence information can e. g. comprise emotional information about the information source.

The present invention allows the display of current or updated information about an information source from which information is received in a simple and easy way. Specifically, the present invention ensures that the user of an electronic equipment according to the present invention always has the most recent information about an information source displayed on the display of the electronic equipment in case that information is received.

Advantageously, the electronic equipment is a mobile radio terminal for a wireless communication system.

The method according to the present invention is advantageously implemented by a computer program product directly loadable into the internal memory of an ale equipment for receiving information in a wireless commumcation system and comprising software code portions for performing the method steps according to the present invention.

### BRIEF DESCRIPTION OF THE DRAWINGS

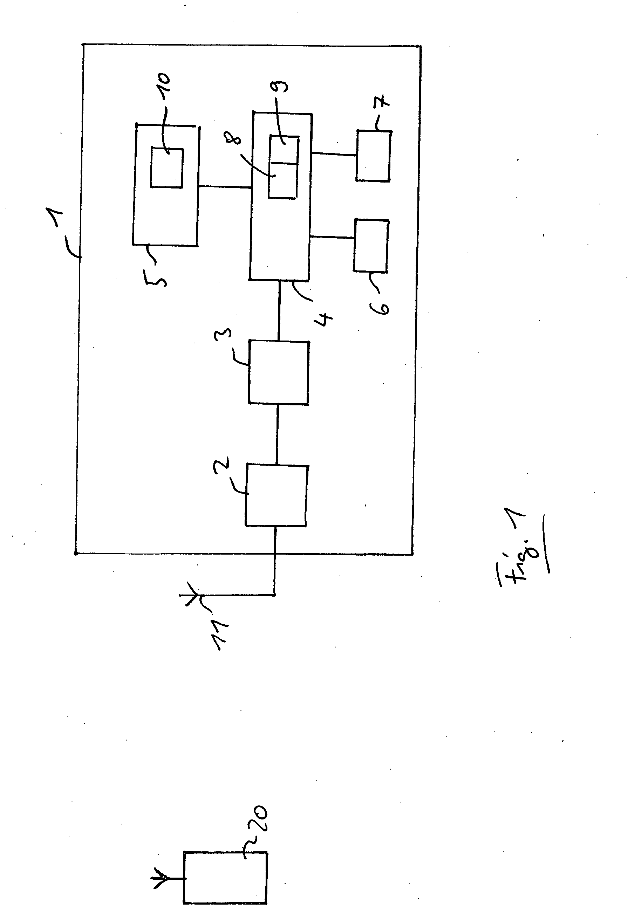

The enclosed Fig. 1 shows a block diagram of an example of an electronic equipment according to the present invention.

### DETAILED DESCRIPTION OF EMBODIMENT

Fig. 1 shows a schematic block diagram of a portable radio communication equipment 1 as an example of an electronic equipment according to the present invention. The portable radio communication equipment 1 is able to transmit and receive information in a wireless communication system, such as e.g. the UMTS, the GSM or any other available wireless telecommunication system.

For the transmission and reception of wireless signals in the telecommunication system, the portable radio communication equipment 1 comprises an antenna 11 which is connected to a transmitter/receiver means 2, which can e.g. be embodied as an HF unit in case of a GSM or a UMTS system. The transmitter/receiver means 2 is connected to further processing means, which are visualised in Fig. 1 as a processing block 3. The processing block 3 comprises the further processing means necessary for (de)modulating, (de)coding and so forth the received information signals depending on the wireless communication system in which the information signals are being transmitted and received. It is to be noted, that the portable radio communication equipment 1 in practice comprises all necessary means and units to be operated in the respective wireless communication system. For the sake of clarity, Fig. 1 and the present description only show and relate to the functionalities which are necessary to understand the present invention.

The processing block 3 is connected to a central control unit 4, which can e.g. be embodied in a microprocessor, central processing unit or the like. The central control unit 4 controls the operation of the portable radio communication equipment 1. The central control unit 4 is connected to a display 6 and input means 7. The display 6, is e.g. a usual cell phone display in case that the portable radio communication equipment 1 is a portable cell phone. In this case, the input means 7 correspond to the usual input keys enabling a user to input numbers, characters and symbols.

The central control unit 4 is further connected to a memory 5 for storing information and/or software code for the operation of the portable radio communication equipment 1. Hereby, the memory 5 comprises an information source identification memory, e.g. a phone book memory, for storing information source identification information, e.g. phone numbers, e-mail addresses and the like, and additional information relating to the identity of the information sources, such as names, images and/or the like. In a simple embodiment, the information source identification memory 10 just comprises pairs of phone numbers and names of communication partners, whereby each phone number is allocated to a name. Alternatively, several phone numbers, such as a cell phone number, an office number, a home phone number and so forth can be allocated to a single name. Instead of or additionally to the name of a communication partner, an image of a communication partner or any other kind of information can be stored. Alternatively or additionally to one or more phone numbers, an e-mail address, a web address or any other address information could be stored, which enables to establish a communication link over the wireless communication system.

Generally, information source identification information is information which enables to establish a communication link over the wireless communication system, such as phone numbers, e-mail addresses and so forth. Additional information in relation to the information sources are e.g. names, images and so forth which enable the identification of who the information source is. The information sources are usually other users using electronic equipments, e.g. a portable phone 20 as shown in Fig. 1, for transmitting information in the wireless communication system.

The central control unit 4 comprises a first detector 8 for detecting if the source of a received information can be identified by determining if an information source identification information comprised in the received information matches an information source identification information stored in the information source identification memory 10. For example, if the portable radio communication equipment 1 receives an incoming phone call from the portable phone 20 and the received control information for establishing the communication link comprises the phone number of the portable phone 20, the first detector 8 compares the received phone number to the phone numbers listed in the information source identification memory 10. If a matching phone number is found, the name and/or an image and/or any other identification information, stored and allocated to the received phone number is displayed on the display 6. The user of the portable radio communication equipment 1 can then easily identify who is calling.

According to the present invention, the central control unit 4 further comprises a second detector 9 for detecting if the received information comprises presence information relating to the information source, whereby, if presence information is comprised in the received information, the presence information is displayed on the display 6 instead of or in addition to the additional information of the matching information source identification information. For example, if control information for establishing a communication link for a phone call from the portable phone 20 is received and the second detector 9 detects presence information in the received control information, the presence information is displayed on a display 6. Hereby, the presence information can either be displayed instead of the additional information relating to the identity of the information source as found in the information source identification memory 10 by the first detector 8 or the presence information is displayed together with this additional information.

The presence information is information about the status and reachability of the transmitting information source. The possible content of the presence information corresponds to the definitions of the presence features and presence attributes as defined in the Wireless Village initiative, Mobile IMPS initiative, Open Mobile Alliance initiative and so forth. For example, the presence information can comprise information about the online status, registration, client information, time zone, geographical location, address, communication availability, contact preferences, language preferences, mood of the user, alias name for the user, and/or any other kind of information defining and specifying the status and reachability of the information source.

The received and detected presence information is automatically stored in the information source identification memory 10 in allocation to the respective stored information source identification information. For example, if the received presence information is information about the reachability of the portable phone 20 or the mood of its user, this presence information is stored in allocation and linked to the phone number of the portable phone 20 stored in the information source identification memory 10. Of course, the additional information allocated to this phone number, such as the name or even the image of the user of the portable phone 20 which are stored in the information source identification memory 10 remain stored. However, if the received and detected presence information is updated additional information, such as an updated name or an updated image of the user of the portable phone 20, then this presence information replaces and/or updates the additional information stored in the information source identification memory 10.

It is to be noted that the first detector 8 and the second detector 9 can be implemented either by hardware or by software.

The present invention enables a more accurate and instant display of information about the transmitting information source in addition to or instead of the static and sometimes old information stored in the information source identification memory 10. A possible advantageous application is e.g. that the user of the portable communication equipment 1 creates a contact list with communication partners and transmits preference information in order to update and actualise the additional information and/or presence information stored in the respective information source identification memories in the respective receiving devices.

## Claims

1. Electronic equipment (1) for receiving information in a wireless communication system, with
an information source identification memory (10) for storing information source identification information and additional information relating to the stored information source identification information,
a first detector (8) for detecting if the source of a received information can be identified by determining if an information source identification information comprised in the received information matches an information source identification information stored in the information source identification memory (10), and, if the detection result is positive, displaying the additional information of the matching information source identification information stored in the information source identification memory (10) on a display (6),
**characterized by**
a second detector (9) for detecting if the received information comprises presence information relating to the information source, whereby, if presence information is comprised in the received information, the presence information is displayed on display instead of or in addition to the additional information of the matching information source identification information.

2. Electronic equipment (1) for receiving information in a wireless communication system according to claim 1,
**characterized in,**
**that** presence information detected by the second detector (9) is automatically stored in the information source identification memory (10) in allocation to the respective stored information source identification information.

3. Electronic equipment (1) for receiving information in a wireless communication system according to claim 2,
**characterized in,**
**that** the presence information replaces and/or updates the additional information stored in the information source identification memory (10) in allocation to the respective information source.

4. Electronic equipment (1) for receiving information in a wireless communication system according to claim 1, 2 or 3,
**characterized in,**
**that** the information source identification information comprises a phone-number allocated to an information source and the additional information comprises an name, an image and /or a symbol allocated to an information source.

5. Electronic equipment (1) for receiving information in a wireless communication system according to one of the claims 1 to 4,
**characterized in,**
**that** the presence information comprises information about the status and/or the reachability of the information source.

6. Electronic equipment (1) for receiving information in a wireless communication system according to one of the claims 1 to 5,
**characterized in,**
**that** the electronic equipment (1) is a mobile radio terminal for a wireless telecommunication system.

7. Method for operating an electronic equipment for receiving information in a wireless communication system, comprising the steps of
detecting if the source of a received information can be identified by determining if an information source identification information comprised in the received information matches an information source identification information stored in a information source identification memory (10), and, if the detection result is positive, displaying additional information relating to the matching information source identification information stored in the information source identification memory (10) on a display (6),
**characterized by**
the further step of detecting if the received information comprises presence information relating to the information source, whereby, if presence information is comprised in the received information, the presence information is displayed on display (6) instead of or in addition to the additional information of the matching information source identification information.

8. Method for operating an electronic equipment for receiving information in a wireless communication system according to claim 7,
**characterized in,**
**that** detected presence information is automatically stored in the information source identification memory (10) in allocation to the respective stored information source identification information.

9. Method for operating an electronic equipment for receiving information in a wireless communication system according to claim 7 or 8,
**characterized in,**
**that** the presence information replaces and/or updates the additional information stored in the information source identification memory (10) in allocation to the respective information source.

10. Method for operating an electronic equipment for receiving information in a wireless communication system according to claim 7, 8 or 9,
**characterized in,**
**that** the information source identification information comprises a phone-number allocated to an information source and the additional information comprises an name, an image and /or a symbol allocated to an information source.

11. Method for operating an electronic equipment for receiving information in a wireless communication system according one of the claims 7 to 10,
**characterized in,**
**that** the presence information comprises information about the status and/or the reachability of an information source.

12. Method for operating an electronic equipment for receiving information in a wireless communication system according to one of the claims 7 to 11,
**characterized in,**
**that** the electronic equipment is a mobile radio terminal for a wireless telecommunication system.

13. Computer program product directly loadable into the internal memory of an electronic equipment for receiving information in a wireless communication system, comprising software code portions for performing the steps of one of the claims 7 to 12 when said product is run in said electronic equipment.
